# EUROPÄISCHE PATENTSCHRIFT

(11) **EP 3 330 196 B1**
(45) Veröffentlichungstag und Bekanntmachung des Hinweises auf die Patenterteilung: **01.05.2019**
(21) Anmeldenummer: 16201630.7
(22) Anmeldetag: 01.12.2016
(51) Int. Cl.: B65D 19/44, F16B 21/02

(54) **VORRICHTUNG ZUR AUFNAHME VON GEGENSTÄNDEN UND ZUGEHÖRIGER VERBINDUNGSKÖRPER**
DEVICE FOR RECEIVING OBJECTS AND CORRESPONDING CONNECTOR
DISPOSITIF DESTINÉ A LA RÉCEPTION D'OBJETS ET CONNECTEUR CORRESPONDANT

(43) Veröffentlichungstag der Anmeldung: 06.06.2018
(73) Patentinhaber: ALWA GmbH & Co. KG Konstruktion & Formenbau, 78652 Deißlingen (DE)
(72) Erfinder: Wasmeier, Albert, 88677 Markdorf (DE)
(74) Vertreter: Engelhardt, Volker

(56) Entgegenhaltungen:
- EP-A1- 2 860 126
- EP-B1- 2 860 127
- AT-U1- 14 852

## Beschreibung

Die Erfindung bezieht sich auf eine Vorrichtung zur Aufnahme von Gegenständen, beispielsweise von Werkstücken oder Werkzeugen, nach dem Oberbegriff des Patentanspruches 1 sowie auf einen Verbindungskörper als Bestandteil der Vorrichtung und zur Anwendung in einer solchen nach Patentanspruch 2.

Derartige Vorrichtungen sind vielseitig einsetzbar und sollen zu Transport-, Lager- oder Bearbeitungszwecken eingesteckte Werkstücke zuverlässig und beschädigungsfrei halten.

Üblicherweise bestehen solche Vorrichtungen aus einer Vielzahl von parallel und beabstandet zueinander verlaufenden Drahtsträngen, die in zwei unterschiedlichen Ebenen orthogonal zueinander verlaufen und somit eine Gitterstruktur bilden, die als Traggestell verwendet ist. Eine derartige Vorrichtung ist beispielsweise der EP 2 860 127 B1 oder der DE 10 2012 0205 91 A1 zu entnehmen. Die an dem Traggestell zu arretierenden Verbindungskörper weisen einen Haltesockel auf, an dem zwei radial abstehende Haltenasen angeformt sind, durch die der Verbindungskörper in die Gitterstruktur einsteckbar und durch eine Drehung um 90° arretierbar ist.

Die Taggestelle und die daran befestigten Verbindungskörper werden oftmals gemeinsam mit den Werkstücken einem Bearbeitungsprozess zugeführt und die Prozess-Flüssigkeiten können durch die Gitterstruktur nach der Bearbeitung schnell abfließen.

Bei solchen Traggestellen hat es sich als nachteilig erwiesen, dass die Gitterstruktur rechteckförmige Aufnahmeöffnungen zur Verfügung stellen muss, in die die Verbindungskörper einsetzbar und verdrehbar sind. Der Abstand zwischen den parallel verlaufenden, beabstandeten Drahtsträngen in der unteren und der oberen Ebene ist folglich unterschiedlich bemessen, wobei typischerweise der Abstand zwischen den Drahtsträngen in der oberen Ebene größer bemessen ist als in der unteren, wodurch die rechteckige Gitterstruktur gebildet ist. Die sich überkreuzenden Drahtstränge sind in den Knotenpunkten fest miteinander verbunden, so dass das Traggestell eine Gitterstruktur mit hoher Eigenstabilität aufweist und die einzelnen reckteckförmigen Aufnahmeöffnungen formstabil sind.

Nachteilig an diesem Stand der Technik hat sich herausgestellt, dass insbesondere bei rotationssymmetrischen Werkstücken die Lagerdichte aufgrund der rechteckigen Form gering ist.

Darüber hinaus hat es sich als nachteilig erweisen, dass die Verbindungskörper nicht mit herkömmlichen quadratischen Gitterstrukturen einsetzbar sind und stets sondergefertigte Gitterstrukturen mit rechteckigen Aufnahmeöffnungen zur Verfügung gestellt werden müssen, da ein Eindrehen der Verbindungskörper ausschließlich bei einer rechteckförmigen Gitterstruktur durchführbar ist. Solche Sonderanfertigungen sind bekanntlich mit erheblichen Kosten verbunden.

Es ist daher Aufgabe der Erfindung eine Vorrichtung sowie einen Verbindungskörper der eingangs genannten Gattung als Befestigungskörper für Gegenstände in einem Traggestell bereitzustellen, durch die eine zuverlässige dauerhafte, jedoch lösbare Verbindung zwischen dem Verbindungskörper und dem Traggestell vorliegt, deren Befestigung ausschließlich mittels eines vorgegebenen Drehmomentes geschaffen bzw. gelöst werden kann. Die Verbindungskörper sollen dabei in einem Spritzgussverfahren kostengünstig herstellbar sein und in herkömmliche quadratischen Gitterstrukturen montierbar sein, so dass die Flächenausnutzung auf einem Traggestell optimal ist.

Diese Aufgabe ist erfindungsgemäß durch die Merkmale der kennzeichnenden Teile von Patentanspruch 1 bzw. 2 gelöst.

Weitere vorteilhafte Weiterbildungen der Erfindung ergeben sich aus den Unteransprüchen.

Dadurch, dass der Haltesockel im Querschnitt quadratisch und an die jeweilige Maschenweite der Aufnahmeöffnung angepasst ist, dass der Haltesockel in der jeweiligen Ebene mindestens zwei Klemmnuten aufweist, die diametral und spiegelsymmetrisch jeweils über eine der Längskanten des Haltesockels verlaufen, dass die jeweilige Klemmnut aus einem Verrundungsradius und einer Tangente gebildet ist und dass der Verrundungsradius innerhalb eines Viertelteilkreises in die Tangente übergeht, kann der Verbindungskörper in die quadratische Aufnahmeöffnung eingesetzt werden und durch eine Drehung um den Teilkreiswinkel arretiert werden.

Darüber hinaus hat es sich als besonders vorteilhaft erwiesen, wenn der Verrundungsradius der Hälfte der Maschenweite entspricht. Die Drahtstränge liegen somit bei dem Verdrehen des Verbindungskörpers in der Klemmnut annähernd punktuell an, so dass der Verbindungskörper leichtläufig verdrehbar ist und von allen Seiten in der Aufnahmeöffnung abgestützt ist. Ferner ist es vorteilhaft, wenn der Verrundungsradius nach einem Teilkreiswinkel von 45° in die Tangente übergeht, so dass der Verbindungskörper nach einer Drehung um 45° an dem Traggestell arretiert ist. Weitere Teilkreiswinkel-Maße sind möglich, solange der Teilkreiswinkel kleiner als 90° ist. Demnach sind Winkelmaße von 30° oder 60° auch möglich.

Zwischen dem Verrundungsradius und der Tangente kann eine Rastnase angeordnet sein, durch die beim Verdrehen des Verbindungskörpers in der Aufnahmeöffnung zwei gegenüberliegende Drahtstränge geringfügig auseinander gebogen werden, so dass die Rastnase einerseits eine haptische Rückmeldung bei dem Erreichen der Endposition gibt und andererseits im eingerasteten Zustand eine Verdrehsicherung bildet.

Die Klemmnuten können eine V-, Rund- oder Reckeckform aufweisen, wobei die Breite der Nuten an den jeweiligen Dicke bzw. Durchmesser der Drahtstränge angepasst ist. Die Drahtstränge können aus einem metallischen Werkstoff hergestellt sein. Besonders vorteilhaft ist dabei, wenn die metallischen Drahtstränge aus einem korrosionsbeständigen Werkstoff hergestellt sind oder mit einem korrosionsbeständigen Werkstoff beschichtet sind.

In der Zeichnung ist ein erfindungsgemäßes Ausführungsbeispiel dargestellt sowie eine Weiterbildung dessen, das nachstehend näher erläutert ist. Im Einzelnen zeigt:
- Figur 1: eine Vorrichtung, bestehend aus einer Vielzahl von parallel und beabstandet zueinander verlaufenden Drahtsträngen, die jeweils in zwei unterschiedlichen Ebenen angeordnet sind und gemeinsam eine Vielzahl von quadratischen Aufnahmeöffnungen zur Bildung eines Traggestelles aufweisen und aus mehreren Verbindungskörpern und einem daran an geformten Haltesockel, der in eine der Aufnahmeöffnungen einsteckbar ist, in perspektivischer Darstellung,

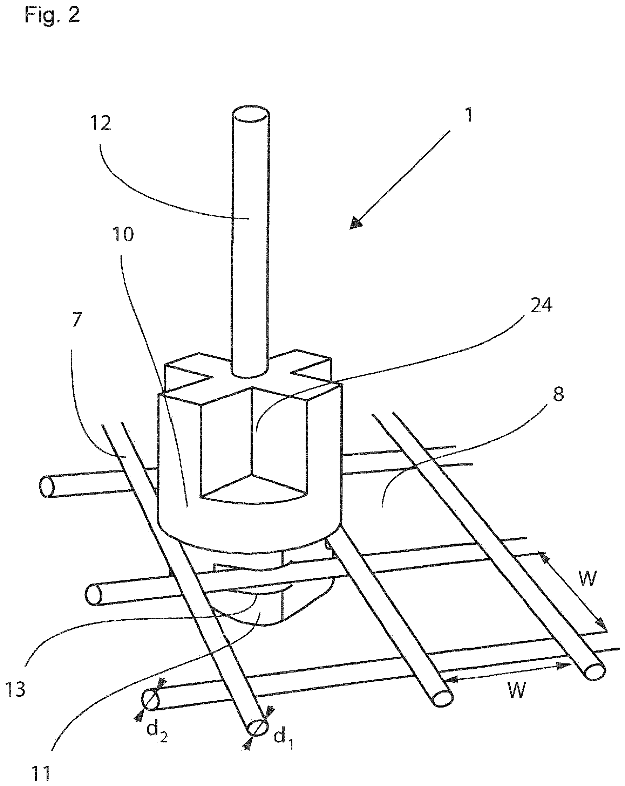

- Figur 2: einen vergrößerten Ausschnitt der Vorrichtung gemäß Figur 1, mit einem eingesetzten Verbindungskörper,

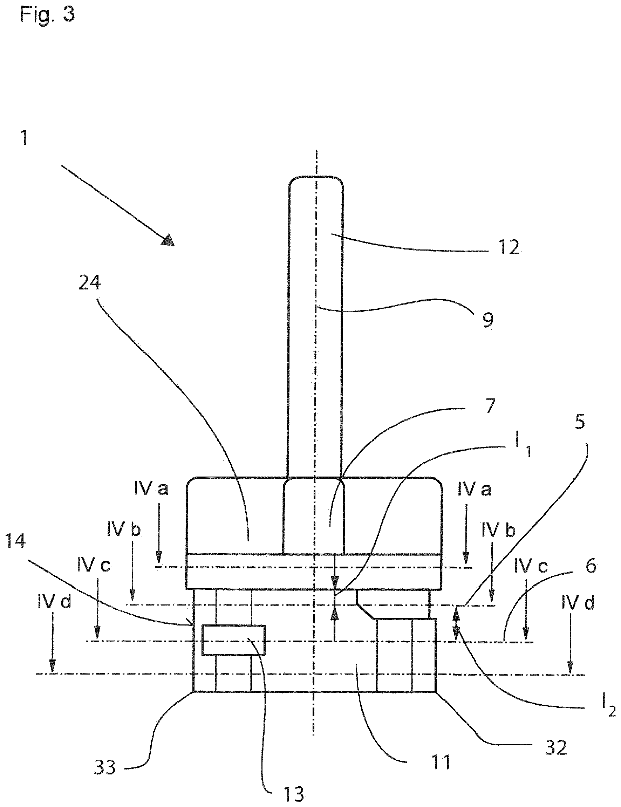

- Figur 3: einen Verbindungskörper, gemäß Figur 1 oder 2, in Seitenansicht,
- Figur 4a: den Verbindungskörper gemäß Figur 3 entlang der Schnittlinie IVa-IVa,
- Figur 4b: den Verbindungskörper gemäß Figur 4a entlang der Schnittlinie IVb-IVb,
- Figur 4c: den Verbindungskörper gemäß Figur 3 entlang der Schnittlinie IVc-IVc,
- Figur 4d: den Verbindungskörper gemäß Figur 3 entlang der Schnittlinie IVd-IVd,
- Figur 5a: eine Weiterbildung des Verbindungskörpers gemäß Figur 1 mit vier parallel angeordneten, beabstandeten Halteelementen, die einen Raum zur Aufnahme eines Gegenstandes bilden, in perspektivischer Darstellung,
- Figur 5b: eine Seitenansicht des Verbindungskörpers gemäß Figur 5a und
- Figur 5c: eine Draufsicht des Verbindungskörpers gemäß Figur 5a.

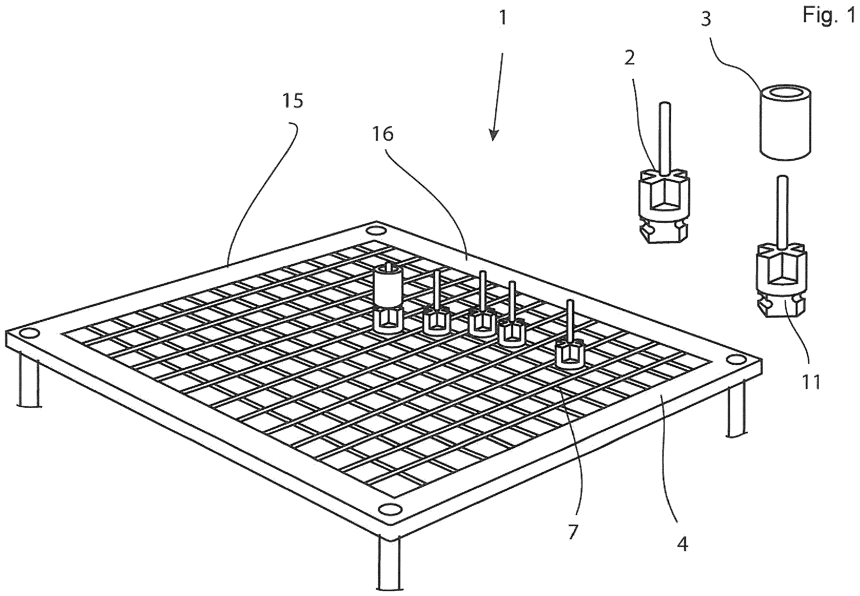

In Figur 1 ist eine Vorrichtung 1 dargestellt, durch die ein Verbindungskörper 2 als Bestandteil der Vorrichtung 1 zur Aufnahme von Gegenständen 3 lageorientiert und drehfest fixiert ist. Die in den Verbindungskörper 2 eingesteckten Gegenstände 3, beispielsweise Werkstücke oder Werkzeuge, sollen zu Transport-, Reinigungs-, Lager- und Bearbeitungszwecken beschädigungsfrei durch die Verbindungskörper 2 abgestützt sein.

Die Vorrichtung 1 umfasst ein Kastenprofil 16, das aus vier senkrecht zueinander verlaufenden Rahmenteilen 15 gebildet ist, die an ihren jeweiligen freien Enden fest miteinander verbunden sind. Diese Kastenprofile 16 können Transporthilfen oder als Haltemittel für Werkstücke und Werkzeuge aller Art verwendet werden.

Zwischen den Rahmenteilen 15 sind eine Vielzahl von parallel und beabstandet zueinander verlaufenden Drahtsträngen 7 angeordnet, die in zwei unterschiedlichen Ebenen 5, 6 verlaufen und folglich ein mit einer Quadrat-Gitterstruktur versehenes Traggestell 4 bilden. Die parallel und beabstandet zueinander angeordneten Drahtstränge 7 liegen in einer der Ebenen 5 oder 6 und sind in ihren Knotenpunkten fest miteinander verbunden. Zwischen jeweils zwei benachbarten Drahtsträngen 7 sind somit eine Vielzahl von quadratischen Aufnahmeöffnungen 8 geschaffen. Der lichte Abstand zwischen zwei parallel verlaufenden, beabstandeten Drahtsträngen 7 entspricht dabei der Maschenweite W, wodurch folglich die Aufnahmeöffnung 8 die quadratischen Maße von W · W aufweist. Die Drahtstränge 7 in den Ebenen 5, 6 sind equidistant angeordnet und die Drahtstränge 7 in den zwei unterschiedlichen Ebenen 5, 6 sind orthogonal zueinander ausgerichtet.

Die Drahtstränge 7 sind vorzugsweise aus einem korrosionsbeständigen metallischen Werkstoff hergestellt und weisen einen rotationssymmetrischen Querschnitt auf dessen Dicke bzw. Durchmesser d₁ bzw. d₂ entspricht.

Der Abstand l₁ zwischen der dem Haltesockel 11 zugewandten Seite des Bodens 10 und der oberen Ebene 5 entspricht der Hälfte der Dicke bzw. des Durchmessers d₁ des Drahtstranges 7 in der oberen Ebene 5. Mit I₂ ist der Abstand zwischen der oberen und der unteren Ebene 5, 6 gekennzeichnet der dem Abstand der beiden Drahtstränge 7 in der oberen und unteren Ebene 5, 6 entspricht, gemessen von deren jeweiligen Mittelpunkten. Bei geometrisch identisch ausgeprägten runden Drahtsträngen 7 entspricht der Abstand zwischen der Ebene 5 und 6 dem Durchmesser d₁ oder d₂ Drahtstränge 7.

Der Verbindungskörper 2 besteht im Wesentlichen aus einem Boden 10, an dessen erster Stirnseite ein Haltesockel 11 angearbeitet oder angeformt ist und an dessen zweiter Stirnseite ein Halte- und Aufnahmeelement 12 fluchtend zu einer Längsachse 9 des Verbindungskörpers 2 ausgerichtet ist. Die Längsachse 9 verläuft somit durch den Flächenmittelpunkt des quadratischen Haltesockels 11.

Der Boden 10 des Verbindungskörpers 2 dient einerseits als horizontale Abstützung für die Gegenstände 3 die durch den Verbindungskörper 2 auf dem Traggestell 4 beabstandet gelagert gehalten sind und andererseits dient die dem Haltesockel 11 zugewandte Seite als Auflagefläche des Verbindungskörpers 2 auf den Drahtsträngen 7 bzw. dem Traggestell 4. Die Grundfläche der dem Haltesockel 11 zugewandten Seite des Bodens 10 ist mindestens so groß bemessen wie die Fläche der Aufnahmeöffnung 8, so dass der Boden 10 des Aufnahmekörpers 2 beim Einsetzen in die Aufnahmeöffnung 8 einen Anschlag bildet durch den die vertikale Position des Verbindungskörpers 2 auf dem Traggestell 4 vorgegeben ist. Vorzugsweise ist jedoch die Grundfläche kreisförmig ausgestaltet, wobei der Durchmesser mindestens der Maschenweite W entspricht.

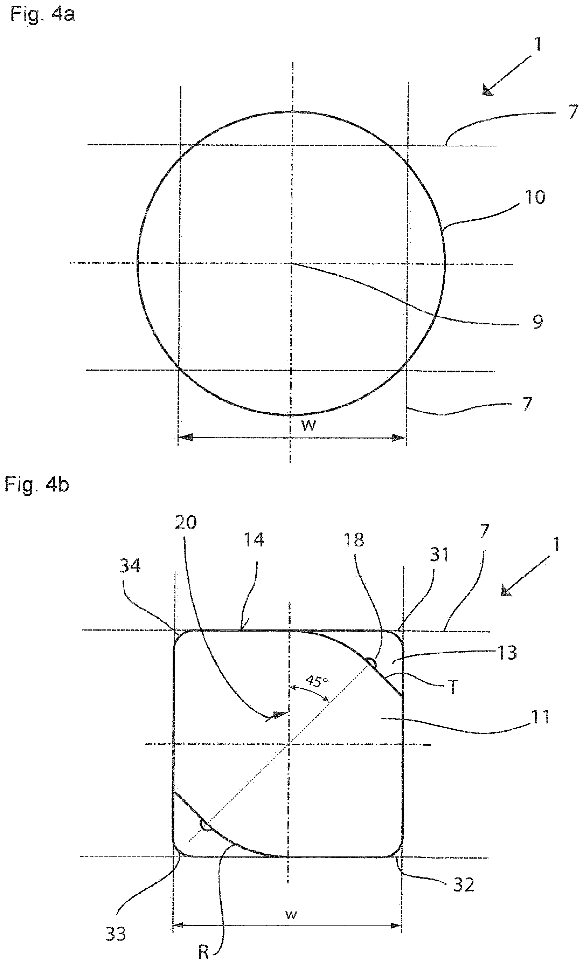

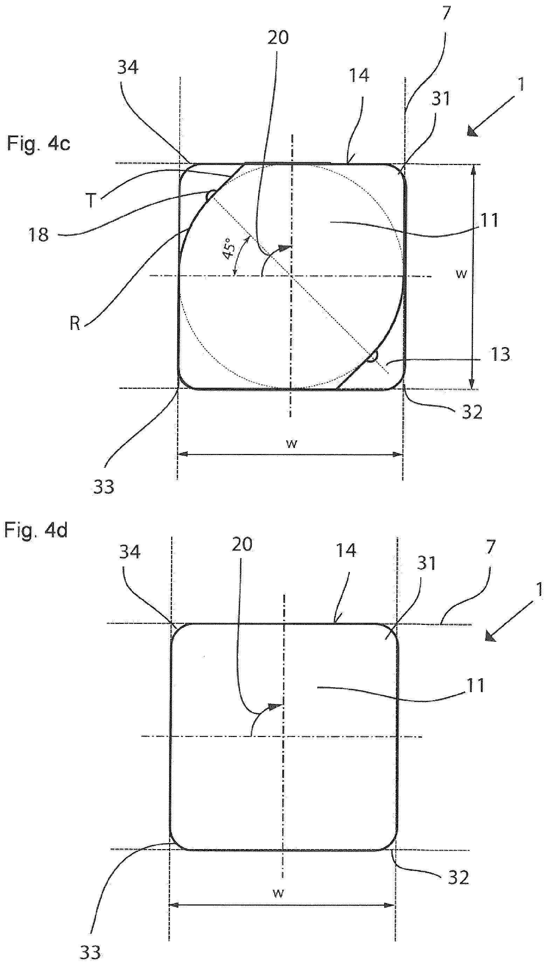

Insbesondere den Figur 4b und 4d ist zu entnehmen, dass der Haltesockel 11 eine quadratische Grundform mit jeweils vier Seitenkanten aufweist, die der Maschenweite W abzüglich einer Toleranz entspricht. An dem Haltesockel 11 erstrecken sich parallel und beabstandet zu der Längsachse 9 vier Längskanten 31, 32, 33, 34. Die Längskanten 31, 32, 33, 34 und die Seitenkanten umrahmen die jeweilige Seitenfläche, die Bestandteil der Mantelfläche des Halteockels ist und können aus fertigungstechnischen Gründen verrundet oder mit einer Fase versehen sein. Diese Verrundung bzw. Fase ist im Verhältnis zu einer Seitenkante des Haltesockels 11 klein bemessen.

Die Länge des Haltesockels 11 parallel zu der Längsachse 9 entspricht mindestens der Tiefe der Aufnahmeöffnung 8, so dass der Haltesockel 11 des Verbindungskörpers 2 die Aufnahmeöffnung 8 im montierten Zustand vollständig durchgreift. Vorzugsweise entspricht die Länge des Haltesockels 11 der Summe der beiden jeweiligen Durchmesser d₁ und d₂ der Drahtstränge 7.

In den Haltesockel 11, dies ist insbesondere den Figuren 4b und 4c zu entnehmen, sind in den zwei Ebenen 5, 6 Klemmnuten 13 eingearbeitet. Die Klemmnuten 13 sind jeweils in die äußere Mantelfläche 14 des Haltesockels 11 in eine der Ebenen 5, 6 senkrecht zur Längsachse 9 eingearbeitet und erstrecken sich jeweils über eine der Längskanten 31, 32, 33, 34 des Haltesockels 11.

Die Klemmnuten 13 in der jeweiligen Ebene 5 oder 6 sind diametral und spiegelverkehrt zueinander angeordnet bzw. um 180° um die Längsachse 9 zueinander verdreht positioniert. Die Anordnung der Klemmnuten 13 in der unteren und oberen Ebene 5, 6 ist analog, jedoch sind die Klemmnuten 13 der beiden Ebenen 5, 6 gegeneinander um 90° um die Längsachse 9 verdreht. Folglich erstrecken sich die Klemmnuten 13 in der oberen Ebene über die Längskanten 31 und 33 und in der unteren Ebene 6 über die Längskanten 32 und 34. Somit befindet sich an jeder Längskante 31, 32, 33, 34 des Haltesockels 11 eine Klemmnut 13.

Um ein Verdrehen des Verbindungskörpers 2 in der Aufnahmeöffnung 8 zu ermöglichen, weist die jeweilige Klemmnut 13 einen Verrundungsradius R auf, der nach einem Teilkreis von Π/4 (= 45°) in eine Tangent T übergeht. Der Verrundungsradius R entspricht dabei der Hälfte der Maschenweite W, also W/2, bzw. der Hälfte der Länge der Seitenkanten und dessen Mittelpunkt auf der Längsachse 9 angeordnet ist. Der Verbindungskörper 2 ist somit um die Längsachse 9 in die mit der Bezugsziffer 20 gekennzeichnete Drehrichtung um 45° verdrehbar. Beim Verdrehen des Verbindungskörpers 2 in der Aufnahmeöffnung 8 liegen die Drahtstränge 7 am Verrundungsradius R der jeweiligen Klemmnut 13 annäherungsweise punktuell an. Nach 45° ist die Endposition des Verbindungskörpers 2 erreicht und die Tangente T der Klemmnut 13 liegt längst an dem jeweiligen Drahtstrang 7 an. Eine weitere Verdrehung des Verbindungskörpers 2 um die Längsachse 9 in Drehrichtung 20 ist nicht möglich.

Um die Verbindungskörper 2 in der Endposition zu arretieren, ist zwischen dem Verrundungsradius R und der Tangente T eine Rastnase 18 angeordnet. Die Rastnase 18 ist dabei derart ausgebildet, dass diese in der Klemmnut 13 von der Längsachse 9 in radialer Richtung absteht, so dass bei dem Verdrehen des Verbindungskörpers 2 die jeweiligen in der Klemmnut 13 anliegenden Drahtstränge 7 auseinander gebogen werden und anschließend bei einer weiteren Drehung in ihre ursprüngliche Position zurückkehren. Durch die Rastnase 18 ist somit einerseits eine Verdrehsicherung geschaffenen und andererseits ist eine taktile Rückmeldung erzeugt. Bei dem Verdrehen steigt nämlich kurz vor dem Erreichen der Endposition das zum Verdrehen benötigte Drehmoment deutlich an und sinkt anschließend wieder schlagartig.

Im montierten Zustand des Verbindungskörpers 2 sind folglich die Drahtstränge 7 in den Klemmnuten 13 gehalten. Die Klemmnuten 13 können hierzu eine rechteckige, runde, V-förmige, oder an die Form der Drahtstränge 7 angepasste Geometrie aufweisen.

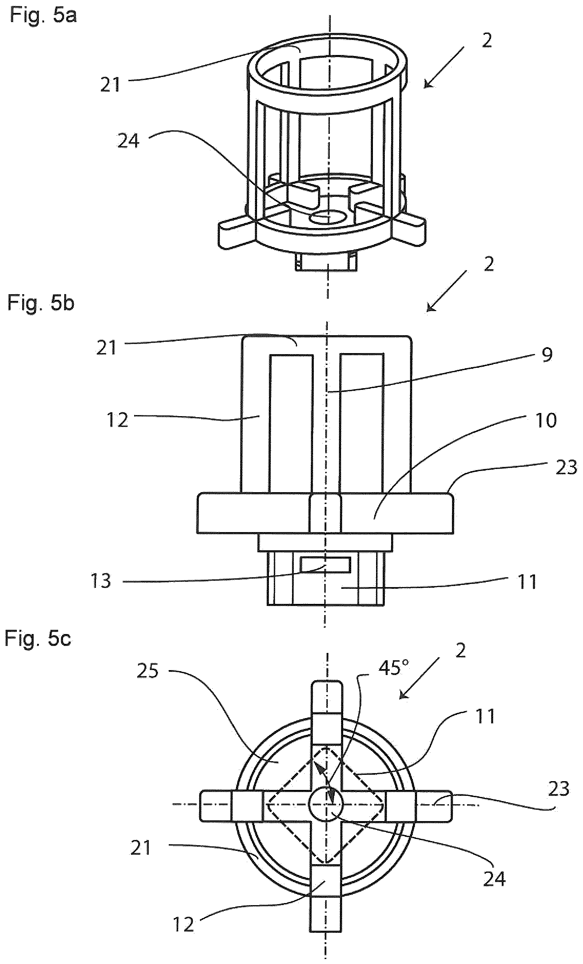

In den Figuren 5a bis 5c ist ein Verbindungskörper 2 dargestellt an dem vier senkrecht von dem Boden 10 abstehende Halteelemente 12 angebracht sind, die gleichmäßig über dem Umfang verteilt sind. Die Halteelemente 12 sind parallel und beabstandet zueinander und parallel zur Längsachse 9 angeordnet und begrenzen einen von außen zugänglichen Raum 25 derart, dass der Gegenstand 3 ausschließlich von einer dem Boden 10 gegenüberliegenden Stirnseite zugänglich ist. Zwei benachbarte Halteelemente 12 sind jeweils mit einer Stützrippe 21 verbunden und somit gegeneinander abgestützt. Auf der dem Raum 25 abgewandten Seite des Verbindungskörpers 2 sind an dem Boden 10 vier über den Umfang gleichmäßig verteilte Absätze 23 angeformt oder angearbeitet und parallel zu dem Boden 10 ausgerichtet. Besonders vorteilhaft ist, wenn die Längskanten 31, 32, 33, 34 des quadratischen Haltesockels 11 auf die Halteelemente 12 ausgerichtet sind. Somit liegt ein Winkel von 45° zwischen dem Haltesockel 11 und der Diagonale von zwei diametral angeordneter Halteelemente 12 vor. Weitere Winkel zwischen 0° und 90° sind möglich, vorzugsweise 30°, 60°, 90°.

Sind drei oder mehrere Verbindungskörper 2 entsprechend benachbart auf einem Traggestell 4 montiert, ist zwischen den Verbindungskörpern 2 ein weiterer Raum 25 umschlossen, in den ein Gegenstand 3 gehalten werden kann. Die Absätze 23 der Verbindungskörper 2 bilden hierbei für den Gegenstand 3 die horizontale Auflagefläche, so dass dieser beabstandet zu den Drahtsträngen 7 bzw. dem Traggestell 4 gehalten ist. Insbesondere bei metallischen Gegenständen ist die beabstandete Lagerung der Gegenstände 3 vorteilhaft um elektrochemische Reaktionen zu vermeiden.

Insbesondere bei Bearbeitungsschritten mit flüssigen bzw. viskosen Medien, beispielsweise der Reinigung, soll darüber hinaus sichergestellt sein, dass das Medium von den Gegenständen 3 ungehindert abfließen kann. Um dies zu ermöglichen können eine oder mehrere Rinnen 24 auf der dem Haltesockel 11 abgewandten Seite des Bodens 10 eingearbeitet sein. Die Rinnen 24 können auch als eine Durchgangsbohrung ausgestaltet sein, die parallel zur Längsachse 9 den Boden und den Haltesockel 11 durchdringt.

## Patentansprüche

1. Vorrichtung (1) zur Aufnahme und zur Arretierung von Gegenständen (3), beispielsweise von Werkstücken, Werkzeugen oder dgl.,
- mit einem nach Art einer Gitterstruktur aufgebauten Traggestell (4), das aus in jeweils einer Ebene (5 oder 6) parallel und beabstandet zueinander angeordneten Drahtsträngen (7) gebildet ist, durch die mindestens eine Aufnahmeöffnung (8) geschaffen ist,
- und mit mindestens einem Verbindungskörper (2) mit einem Boden (10), an dessen einer Stirnseite fluchtend zu einer Längsachse (9) ein Haltesockel (11) vorgesehen ist, der in eine der Aufnahmeöffnungen (8) des Traggestells (4) einsteckbar ist und diese durchgreift und an dessen gegenüberliegenden Stirnseite eine oder mehrere Halte- oder Aufnahmeelemente (12) angebracht sind, durch die die Gegenstände (3) mit dem Verbindungskörper (2) und dem Traggestell (4) fixierbar sind,
**dadurch gekennzeichnet**
- **dass** die Gitterstruktur eine Quadrat-Gitterstruktur ist und die mindestens eine Aufnahmeöffnung (8) eine quadratische Aufnahmeöffnung ist, deren Seitenkanten eine Maschenweite (W) aufweisen,
- **dass** der Haltesockel (11) im Querschnitt quadratisch und an die jeweilige Maschenweite (W) der Aufnahmeöffnung (8) angepasst ist,
- **dass** der Haltesockel (11) in der jeweiligen Ebene (5, 6) des Traggestells (4) mindestens zwei Klemmnuten (13) aufweist, die jeweils diametral und spiegelsymmetrisch gegenüberliegen, wobei die Klemmnuten (13) der beiden Ebenen (5, 6) gegeneinander um 90° um die Längsachse (9) des Verbindungskörpers (2) verdreht sind und jeweils über eine der Längskanten (31 und 33, 32 und 34) des Haltesockels (11) verlaufen,
- **dass** die jeweilige Klemmnut (13) einen Verrundungsradius (R) und eine Tangente (T) aufweist, derart, dass der Verlauf des Nutgrunds der Klemmnut (13) in den Ebenen (5, 6) des Traggestells (4) durch den Verrundungsradius (R) und die Tangente (T) gebildet ist und
- **dass** der Verrundungsradius (R) innerhalb eines Viertelteilkreises in die Tangente (T) übergeht.

2. Verbindungskörper (2), insbesondere zur Anwendung in einer Vorrichtung (1) nach Anspruch 1, mit einem Boden (10), an dessen erster Stirnseite ein Haltesockel (11) vorgesehen ist, und mit mindestens einem dem Haltesockel (11) gegenüberliegenden Halte- oder Aufnahmeelement (12) zur Aufnahme und Fixierung von Gegenständen (3),
**dadurch gekennzeichnet,**
- **dass** der Haltesockel (11) im Querschnitt quadratisch ausgestaltet ist,
- **dass** der Haltesockel (11) in zwei parallel verlaufenden, beabstandeten Ebenen (5, 6), die senkrecht zur Längsachse (9) des Verbindungskörpers (2) ausgerichtet sind, jeweils mindestens zwei spiegelsymmetrisch angeordnete Klemmnuten (13) aufweist, die jeweils diametral gegenüberliegen, wobei die Klemmnuten (13) der beiden Ebenen (5, 6) gegeneinander um 90° um die Längsachse (9) des Verbindungskörpers (2) verdreht sind, und die sich über eine der Längskanten (31 und 33, 32 und 34) des Haltesockels (11) erstrecken und
- **dass** die jeweilige Klemmnut (13) einen Verrundungsradius (R) und eine Tangente (T) aufweist, derart, dass der Verlauf des Nutgrunds der Klemmnut (13) in den Ebenen (5, 6) des Traggestells (4) durch den Verrundungsradius (R) und die Tangente (T) gebildet ist und
- **dass** der Verrundungsradius (R) innerhalb eines Viertelteilkreises in die Tangente (T) übergeht.

3. Vorrichtung (1) nach Anspruch 1,
**dadurch gekennzeichnet,**
**dass** der Verrundungsradius (R) der Hälfte der Maschenweite (W), W/2, entspricht und dessen Mittelpunkt auf der Längsachse (9) liegt.

4. Verbindungskörper (2) nach Anspruch 2,
dass der Verrundungsradius (R) der Hälfte der Seitenlänge des quadratischen Haltesockels (11) entspricht und dessen Mittelpunkt auf der Längsachse (9) liegt.

5. Vorrichtung (1) nach einem der vorgenannten Ansprüche 1 oder 3, **dadurch gekennzeichnet,**
**dass** der Verrundungsradius (R) nach einem Teilkreis von 45° in die Tangente (T) übergeht.

6. Verbindungskörper (2) nach einem der vorgenannten Ansprüche 2 oder 4,
**dadurch gekennzeichnet,**
**dass** der Verrundungsradius (R) nach einem Teilkreis von 45° in die Tangente (T) übergeht.

7. Verbindungskörper (2) nach einem der vorgenannten Ansprüche 2, 4 oder 6,
dadurch geennzeichnet,
dass in der Klemmnut (13) eine Rastnase (18) angeformt oder angearbeitet ist und dass die Rastnase (18) in der Klemmnut (13) radial bezogen auf die Längsachse (9) absteht.

8. Verbindungskörper (2) nach Anspruch 7,
**dadurch gekennzeichnet,**
**dass** die Rastnase (18) in der Klemmnut (13) im Übergangsbereich zwischen dem Verrundungsradius (R) und der Tangente (T) angeordnet ist.

9. Verbindungskörper (2) nach einem der vorgenannten Ansprüche 2, 4, 6, 7 oder 8,
**dadurch gekennzeichnet,**
**dass** der Boden (10) des Verbindungskörpers (2) mindestens eine Rinne (24) aufweist, durch die viskose Medien von dem Boden (10) des Verbindungskörpers (2) abfließen können.

10. Verbindungskörper (2) nach einem der vorgenannten Ansprüche 2, 4, 6, 7, 8 oder 9,
**dadurch gekennzeichnet,**
**dass** die Klemmnuten (13) im Querschnitt V-förmig, rund oder rechteckig ausgebildet sind.

11. Vorrichtung (1) nach Anspruch 1, **dadurch gekennzeichnet,**
**dass** die Drahtstränge (7) im Querschnitt rund, quadratisch oder vieleckig ausgebildet sind.

12. Vorrichtung (1) nach Anspruch 1 oder 11,
**dadurch gekennzeichnet,**
**dass** die Drahtstränge (7) aus einem metallischen Werkstoff und der Verbindungskörper (2) aus einem Kunststoff-Werkstoff, vorzugsweise in einem Spritzgussverfahren, hergestellt sind.

13. Vorrichtung (1) nach einem der Ansprüche 1, 11 oder 12,
**dadurch gekennzeichnet,**
**dass** die freien Enden der jeweiligen Drahtstränge (7) der beiden oberen und unteren Ebenen (5, 6) an einem geschlossenen Kastenprofil (16) befestigt sind.

14. Vorrichtung (1) nach Anspruch 13,
**dadurch gekennzeichnet,**
**dass** das Kastenprofil (16) aus vier miteinander verbundenen Rahmenteilen (15) gebildet ist.

## Claims

1. A device (1) for holding and locking objects (3), for example workpieces, tools or the like,
- with a support rack (4) structured according to the type of a mesh structure created from wire strands (7) aligned arranged on one plane (5, 6) each parallel to and at a distance from one another, by means of which at least one holding opening (8) is created,
- and with at least one connection body (2) featuring a base (10), on one face end of which a holding socket (11) is provided flush with a longitudinal axis (9), which can be inserted into one of the holding openings (8) of the support rack (4) and projects through it, and on the opposite face end of which there are attached one or more retaining or holding elements (12) by means of which the objects (3) can be fixed onto the connection body (2) and the support rack (4),
**characterized in that**,
- the mesh structure is a square mesh structure and the holding opening (8), of which there is at least one, is a square holding opening the side edges of which have a mesh width (W),
trans
- that the holding socket (11) has a square cross section and is adapted to the corresponding mesh width (W) of the holding opening (8),
- that the holding socket (11) has at least two clamping grooves (13) in the corresponding plane (5, 6) of the support rack (4), with these clamping grooves located diagonally opposite to one another in a mirror-symmetrical arrangement, with the clamping grooves (13) located opposite to the two planes (5, 6) rotated through 90° about the longitudinal axis (9) of the connection body (2) and each of them extend along one of the longitudinal edges (31 and 33, 32 and 34) of the holding socket (11),
- that the corresponding clamping groove (13) has a curvature radius (R) and a tangent (T) such that the profile of the base of the clamping groove (13) is formed in the planes (5, 6) of the support rack (4) by the curvature radius (R) and the tangent (T) and
- that the curvature radius (R) transitions into the tangent (T) within a quarter segment of a circle.

2. A connection body (2), in particular for use in a device (1) in accordance with Claim 1, featuring a base (10) on the first face end of which a holding socket (11) is provided, and with at least one retaining or holding element (12) opposite to the holding socket (11) which is for holding and securing objects (3),
**characterized in that**
- the holding socket (11) has a square cross section,
- that the holding socket (11) possesses at least two clamping grooves (13) located in a mirror-symmetrical arrangement, each in two planes (5, 6) running parallel to one another and spaced apart which are aligned at right angles to the longitudinal axis (9) of the connection body (2), in which case the clamping grooves (13) are located diametrically opposite to one another with the clamping grooves (13) of the two planes (5, 6) rotated through 90° about the longitudinal axis (9) of the connection body (2) and each of them extend along one of the longitudinal edges (31 and 33, 32 and 34) of the holding socket (11) and
- that the corresponding clamping groove (13) has a curvature radius (R) and a tangent (T) such that the profile of the base of the clamping groove (13) is formed in the planes (5, 6) of the support rack (4) by the curvature radius (R) and the tangent (T) and
- that the curvature radius (R) transitions into the tangent (T) within a quarter segment of a circle.

3. The device (1) in accordance with Claim 1,
**characterized in that**
the curvature radius (R) corresponds to half the mesh width (W), W/2, and its midpoint is located on the longitudinal axis (9).

4. The connection body (2) in accordance with Claim 2,
**characterized in that**
the curvature radius (R) corresponds to half the side length of the square holding socket (11), and its midpoint is located on the longitudinal axis (9).

5. The device (1) in accordance with one of the aforementioned Claims 1 or 3,
**characterized in that**
the curvature radius (R) transitions into the tangent (T) after a 45° segment of a circle.

6. The connection body (2) in accordance with one of the aforementioned Claims 2 or 4,
**characterized in that**
the curvature radius (R) transitions into the tangent (T) after a 45° segment of a circle.

7. The connection body (2) in accordance with one of the aforementioned Claims 2, 4 or 6,
**characterised in that**,
a detent lug (18) is formed or worked on in the clamping groove (13) and that the detent lug (18) projects radially in the clamping groove (13) in relation to the longitudinal axis (9).

8. The connection body (2) in accordance with Claim 7,
**characterised in that**,
the detent lug (18) is arranged in the clamping groove (13) in the transition zone between the curvature radius (R) and the tangent (T).

9. The connection body (2) in accordance with one of the aforementioned Claims 2, 4, 6, 7 or 8,
**characterised in that**,
the base (10) of the connection body (2) possesses at least one channel (24) by means of which the viscose media can drain away from the base (10) of the connection body (2).

10. The connection body (2) in accordance with one of the aforementioned Claims 2, 4, 6, 7, 8 or 9,
**characterised in that**,
the clamping grooves (13) are configured with a V-shaped, round or rectangular cross section.

11. The device (1) in accordance with Claim 1,
**characterized in that**
the wire strands (7) are configured with a round, square or polygonal cross section.

12. The device (1) in accordance with Claim 1 or 11,
**characterized in that**
the wire strands (7) are manufactured from a metallic material and the connection body (2) from a polymer material, preferably in an injection moulding process.

13. The device (1) in accordance with Claims 1, 11 or 12,
**characterized in that**
the free ends of the corresponding wire strands (7) of the two upper and lower planes (5, 6) are attached to a closed box section (16).

14. The device (1) in accordance with Claim 13,
**characterized in that**
the box section (16) is formed from four interconnected frame parts (15).

## Revendications

1. Dispositif (1) servant à la réception et au positionnement d'objets (3), p. ex.
des pièces à usiner, des outils etc.
- avec un support (4) conçu sous la forme d'une grille formée par respectivement des faisceaux de fil (7) parallèles, disposés dans un plan (5 ou 6) et espacés les uns des autres, qui forment au moins une ouverture de réception (8) et
- avec au moins un corps de raccordement (2) possédant un fond (10) et portant, sur une de ses faces frontales un socle de retient (11) en alignement précis avec son axe longitudinal (9), qui se laisse insérer dans une des ouvertures de réception (8) du support (4) et passe par celle-ci, et qui, sur sa face frontale opposée, comporte un ou plusieurs éléments de retient ou de réception (12) permettant de fixer les objets (3) au corps de raccordement (2) et au support (4),
**caractérisé en ce que**
la structure en grille est carrée et que l'ouverture de réception (8) est une ouverture de réception carrée, dont les bords latéraux possèdent une largeur de mailles (W),
- que la section transversale du socle de retient (11) est carrée et adaptée à la largeur de mailles respective (W) de l'ouverture de réception,
- que dans le plan respectif (5, 6) du support (4), le socle de retient (11) comporte au moins deux gorges de serrage (13) diamétralement opposées et symétriquement réfléchies, les gorges de serrage (13) des deux plans (5, 6) étant tournées de 90° autour de l'axe longitudinal (9) du corps de raccordement (2) et s'étendant respectivement sur un des bords longitudinaux (31 et 33, 32 et 34) du socle de retient (11),
- que la gorge de serrage respective (13) a un rayon d'arrondissage (R) et une tangente (T), de sorte que la géométrie du fond de la gorge de serrage (13) dans les plans (5, 6) du support (4) est formée par le rayon d'arrondissage (R) et la tangente (T),
- que le rayon d'arrondissage (R) passe dans un quart de cercle gradué dans la tangente (T).

2. Corps de raccordement (2), en particulier pour application dans un dispositif (1) d'après la revendication 1, avec un fond (10), la première face frontale duquel portant un socle de retient (11), et avec au moins un élément de retient ou de réception (12) opposé au socle de retient (11), qui sert à la réception et au positionnement d'objets (3),
**caractérisé en ce que**
- la section transversale du socle de retient (11) est carrée,
- dans deux plans parallèles et espacés (5, 6), perpendiculaires à l'axe longitudinal (9) du corps de raccordement (2), le socle de retient (11) comporte au moins deux gorges de serrage (13) diamétralement opposées et symétriquement réfléchies, où les gorges de serrage opposées (13) des deux plans (5, 6) sont tournées de 90° autour de l'axe longitudinal (9) du corps de raccordement (2) et s'étendent sur un des bords longitudinaux (31 et 33, 32 et 34) du socle de retient (11),
- la gorge de serrage respective (13) a un rayon d'arrondissage (R) et une tangente (T), de sorte que la géométrie du fond de la gorge de serrage (13) dans les plans (5, 6) du support (4) est formée par le rayon d'arrondissage (R) et la tangente (T),
- le rayon d'arrondissage (R) passe dans un quart de cercle gradué dans la tangente (T).

3. Dispositif (1) d'après la revendication 1,
**caractérisé en ce que**
le rayon d'arrondissage (R) correspond à la moitié de la largeur de maille (W), W/2 et que son centre se trouve sur l'axe longitudinal (9).

4. Corps de raccordement (2) d'après la revendication 2,
**caractérisé en ce que**
le rayon d'arrondissage (R) correspond à la moitié de la longueur du côté du socle de retient carré (11) et que son centre se trouve sur l'axe longitudinal (9).

5. Dispositif (1) d'après une des revendication précédentes 1 ou 3,
**caractérisé en ce que**
le rayon d'arrondissage (R) passe après un cercle gradué de 45° dans la tangente (T).

6. Corps de raccordement (2) d'après une des revendication précédentes 2 ou 4,
**caractérisé en ce que**
le rayon d'arrondissage (R) passe après un cercle gradué de 45° dans la tangente (T).

7. Corps de raccordement (2) d'après une des revendication précédentes 2, 4 ou 6,
**caractérisé en ce que**
dans la gorge de serrage (13), il est formé ou ajouté un nez de crantage (18) et que dans la gorge de serrage (13), le nez de crantage (18) saille radialement avec référence à l'axe longitudinal (9).

8. Corps de raccordement (2) d'après la revendication 7,
**caractérisé en ce que**
dans la gorge de serrage (13), le nez de crantage (18) est disposé au niveau du passage du rayon d'arrondissage (R) à la tangente (T).

9. Corps de raccordement (2) d'après une des revendications précédentes 2, 4 6, 7 ou 8,
**caractérisé en ce que**
le fond (10) du corps de raccordement (2) comporte au moins une gorge (24) qui permet de faire s'écouler des milieux visqueux du fond du corps de raccordement (2).

10. Corps de raccordement (2) d'après une des revendications précédentes 2, 4 6, 7, 8 ou 9,
**caractérisé en ce que**
les gorges de serrage (13) possèdent une section transversale en V, ronde ou rectangulaire.

11. Dispositif (1) d'après la revendication 1,
**caractérisé en ce que**
les faisceaux de fil (7) possèdent une section transversale ronde, carrée ou polygonale.

12. Dispositif (1) d'après les revendications 1 ou 11,
**caractérisé en ce que**
les faisceaux de fil (7) sont faits en matériau métallique et le corps de raccordement (2) en matériau synthétique, réalisés de préférence au moulage par injection.

13. Dispositif (1) d'après une des revendications 1, 11 ou 12,
**caractérisé en ce que**
les extrémités libres des faisceaux de fil respectifs (7) de deux plans supérieurs et inférieurs (5, 6) sont fixées à un profil en caisse fermé (16).

14. Dispositif (1) d'après la revendication 13,
**caractérisé en ce que**
le profil en caisse (16) est formé par quatre éléments cadres (15) raccordés ensemble.
